# EUROPEAN PATENT APPLICATION

(11) **EP 0 856 350 A1**
(43) Date of publication of application: **05.08.1998**
(21) Application number: 98101845.0
(22) Date of filing: 03.02.1998
(51) Int. Cl.: B01D 53/94, B01D 53/86, B01J 23/58, B01J 23/63

(54) **Catalyst for purifying exhaust gas and method of making the same**

(30) Priority: 04.02.1997 JP 21133/97; 19.01.1998 JP 7180/98
(71) Applicant: MAZDA MOTOR CORPORATION, Aki-gun, Hiroshima 730-91 (JP)
(72) Inventor: Ichikawa, Satoshi, Hiroshima-shi, Hiroshima (JP); Takemoto, Takashi, Higashihiroshima-shi, Hiroshima (JP); Shigetsu, Masahiko, Higashihiroshima-shi, Hiroshima (JP); Misonoo, Kazuo, Hiroshima-shi, Hiroshima (JP)
(74) Representative: Müller-Boré & Partner Patentanwälte

(57) **Abstract**

An exhaust gas purifying catalyst comprises an alumina base material prepared by pre-heating active alumina particles so as to be partly bonded together, a principal catalytic metal such as palladium (Pd) and at least one of auxiliary catalytic metals including barium (Ba), lanthanum (La), zirconium (Zr) and neodymium (Nd) supported by the alumina base material.

## Description

This invention relates to a catalyst for purifying exhaust gases from an automobile engine or boilers and a method of making the catalyst.

Three way catalysts for purifying exhaust gases from an automobile engine typically which use active alumina and ceria applied to a monolith catalyst carrier as a support material for catalytic metals are well known in the art. Such a three way catalyst converts oxides of nitrogen (NOx), carbon monoxide (CO) and hydrocarbons (HC) in the exhaust from an engine, thereby purifying the exhaust. The three way catalyst shows a high catalytic conversion efficiency for the exhaust from an engine when burning a stoichiometric mixture. In the event where the engine operates at a high load, the temperature of the exhaust increases higher than 1,000°C in some cases. In order to prevent the three way catalyst from causing thermal deterioration, a fuel mixture of a lowered air-to-fuel ratio or an enriched fuel mixture is supplied to hold a rise in exhaust temperature, which forces up the fuel consumption rate and lowers the catalytic conversion efficiency.

From the viewpoint of preventing thermal deterioration of a catalyst, it has been proposed in Japanese Unexamined Patent Publication No. 62-83315 to increase the thermal stability of active alumina by baking γ-alumina powder supporting a solution of at least one of salts of metals such as cerium (Ce), lanthanum (La), strontium (St), barium (Ba) and yttrium (Y) at 500 to 700°C. This is intended to restrain sintering of the γ-alumina particles by means of an effect of a metal oxide produced as a result of backing the metallic salt and thereby to prevent a decline in specific surface area of the γ-alumina particles.

It has been further proposed in Japanese Unexamined Patent Publication No. 64-58347 to produce a three way catalyst superior in heat-resistance by wash-coating slurry of a mixture of active alumina with an element of the platinum group adhered thereto, ceria, a barium compound and a zirconium compound on a monolith catalyst carrier and baking the slurry at 200 to 900°C. This is intended to restrain sintering of the element of the platinum group and the ceria by means of these barium compound and zirconium compound.

It is an objective of the invention to provide a catalyst which has high heat-resistance sufficiently to eliminate a decline in catalytic conversion efficiency even after it has been exposed to high temperature exhaust gases.

It is another object of the invention to provide a catalyst which avoids the necessity of enriching a fuel mixture even while the exhaust is at high temperatures and prevents an increase in fuel consumption rate and a decline in catalytic conversion efficiency.

For the purpose of restraining sintering of the γ-alumina particles by means of additional metal oxides such as a barium oxide, the prior art catalyst must be added with a metal oxide sufficiently large in amount to balance against the γ-alumina from necessity, which is, however, practically difficult. In particular, a large amount of a barium oxide is a barrier to chemical contact of a principal catalytic element with the exhaust, putting the catalyst at a disadvantage in low temperature catalytic activity. Further, one of the principal problems regarding the prior art catalyst added with a barium compound and a zirconium compound with the intention of restrain sintering of an element of the platinum group and ceria involves sintering of active alumina particles. All these problems of the prior art catalysts are solved by the present invention.

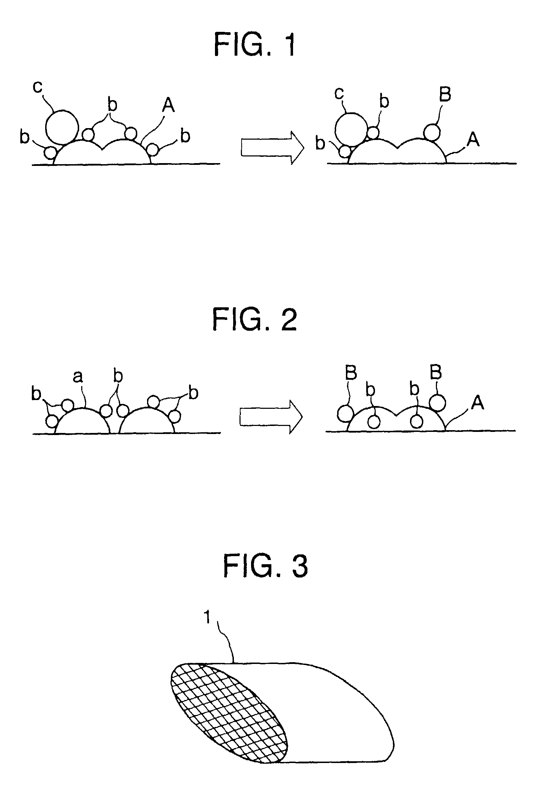

As a result of investigations conducted by the inventors of this application, an empirical knowledge revealed that thermal deterioration of a catalyst was caused by catalytic material particles buried in active support material particles. Specifically, as shown in Figure 2, when a catalyst is heated, fine catalyst particles *b* supported by active alumina particles *a* are not only partly changed to coarse catalyst particles *B* as a result of sintering of the fine catalyst particles *b* but partly buried in secondary active alumina particles *A* which were yielded from the active alumina particles *a* as a result of sintering of the active alumina particles *a*.

Studies in burying of catalyst particles due to sintering were conducted on the basis of the empirical knowledge and, as a result, the problem of burying of the catalyst particles *b* was solved by supporting catalytic particles *b* by secondary alumina particles *A* which were yielded by previously sintering active alumina particles *a* to some extent. In more detail, as shown in Figure 1, after having sintered active alumina particles *a* to some extent to yield secondary active alumina particles *A*, catalytic particles *b* and catalytic particles *c* for controlling sintering the catalytic particles *b* were supported by the secondary active alumina particles *A*. It was revealed that even a reduced content of the catalytic particles *c* brought about no aggravation of expected effects of the catalyst.

A catalyst for purifying exhaust gases resulting from fuel combustion invented on the basis of the above studies comprises an alumina base material with active alumina particles partly bonded together by thermal treatment and a principal catalytic material and at least one auxiliary catalytic material which are supported by the alumina base material. The auxiliary catalytic material is selected among barium (Ba), lanthanum (La), zirconium (Zr) and neodymium (Nd).

The catalyst using active alumina particles previously bonded together by thermal treatment significantly lessens sintering of the base material i.e. active alumina particles, resulting from exposure to high heat. In other words, the catalyst in particular the base material, is stable against heat and prevents burying of the catalytic material particles in the base material particles even while it is exposed to high temperature exhaust gases, keeping high conversion efficiency for a long time. Less sintering of the base material implies restraint of a decrease in specific surface area of the γ-alumina particles, which is always desirable for prevention of aggravation of the low temperature catalytic activity.

The auxiliary catalytic metal restrains sintering of the principal catalytic metal, which provides improvement of catalytic conversion efficiency of the catalyst at temperatures as high as increasing the activity of the principal catalytic metal. Because the active alumina itself is stable against heat and the sintering of the active alumina particles is insignificant, the major role that the auxiliary catalytic metal is required to play is to restrain sintering of the principal catalytic metal, as a result of which, the catalyst may use an auxiliary catalytic metal as small in content as possible.

The γ-alumina, whose particles have large specific surface areas, is desirable as the base material in view of improving the catalytic activity. Further, the utilization is made of a noble metal such as palladium (Pd) or platinum (Pt), more effectively in combination with rhodium (Rh), as a principal catalytic material in view of increasing the catalytic conversion efficiency. As an auxiliary catalytic material which is expected to play a role of steric exclusion for preventing sintering of the principal catalytic material, barium (Ba) is desirable because of large radii of atoms. While the barium (Ba) additive as an auxiliary catalytic material has the advantageous of improving high temperature catalytic activity of the catalyst or heat-resistance of the catalyst, an increased barium content of the catalyst prevents contact between exhaust gases and the base material and the principal catalytic material, bringing about aggravation of low temperature catalytic activity of the catalyst. In the case where barium (Ba) is utilized as an auxiliary catalytic material, the barium content of the catalyst is desirable to be more than 1 gram per one liter of a monolith catalyst carrier in view of the high temperature catalytic activity and to be less than 20 gram per one liter of the monolith catalyst carrier in view of the low temperature catalytic activity, and then is suitable to be between 3 and 10 gram and, in particular, between 3 and 5 gram per one liter of the monolith catalyst carrier.

The exhaust gas purifying catalyst in accordance with another embodiment of the invention may be coated on a catalyst carrier as a double layered catalyst comprising a first catalytic layer which contains a catalytic material supported by ceria and a second catalytic layer which contains a principal catalytic material and at least one auxiliary catalytic material supported by an alumina base material with active alumina particles partly bonded together by thermal treatment. The auxiliary catalytic material is selected among barium (Ba), lanthanum (La), zirconium (Zr) and neodymium (Nd).

With the exhaust gas purifying catalyst, even in events where the exhaust gas changes its oxygen concentration, the ceria in one catalytic layer restrains the change in oxygen concentration due to an oxygen absorption and release effect (oxygen storage effect), leading to an extended range of air-to-fuel ratios for expected activity of the catalyst. On the other hand, the active alumina with high thermal stability in the other catalytic layer prevents the catalytic materials from burying in the active alumina and deterioration of activity due to exposure of the catalyst even to high temperature exhaust gases, and then the auxiliary catalytic metal restraints sintering of the principal catalytic metal, providing encouraged improvement of the catalytic activity.

The one of the two catalytic layers, which includes ceria, is suitably coated over the other catalytic layer containing barium (Ba) as the auxiliary catalytic metal directly coated on a catalyst carrier such as a monolith honeycomb carrier. While the auxiliary catalytic metal such as barium (Ba) is effective in preventing sintering of the principal catalytic metal, if barium (Ba) is in the one catalytic layer (which is referred to as an over catalytic layer) exposed directly to exhaust gases, it is considered that the barium (Ba) prevents contact of the principal catalytic metal to the exhaust gas due to large sizes of barium particles and further prevents the exhaust gas from making inroad into the under catalytic layer and consequently leaves the under catalytic layer active only insufficiently on the exhaust gas. For this reason, in order to avoid aggravation of the catalytic conversion efficiency due to the additive of an auxiliary catalytic metal such as barium (Ba) in the catalyst, the auxiliary catalytic metal is suitably added in the under catalytic layer which is isolated from direct exposure to exhaust gases.

The exhaust gas purifying catalyst of the invention is produced by pre-heating active alumina as a base material so as to bond partly active alumina particles together and supporting a principal catalytic material and at least one auxiliary catalytic metal selected among barium (Ba), lanthanum (La), zirconium (Zr) and neodymium (Nd) in the alumina base material. Pre-heating the active alumina provides thermal stabilization of the alumina base material with an effect of prevention of sintering of the catalytic materials.

Specifically, the active alumina is suitably preheated at a temperature between 900 and 1,000°C for a time between 8 and 50 hours. While thermal stabilization of the active alumina can be gained at temperatures lower than 900°C, it is necessary to heat the active alumina for an increased time as the heating temperature is lowered, which is always undesirable in view of productivity. On the other hand, if heating the active alumina at temperatures higher than 1,000°C, the specific surface area of an active alumina particle is greatly reduced, which is undesirable in order to ensure the catalytic activity. Further, a heating time shorter than eight hours is too short for the active alumina to exhibit sufficient thermal stability, and it is hard for the active alumina to gain improvement of thermal stability as a result of an extended heating time longer than 50 hours. Accordingly, a heating time longer than 50 hours leads to a decline in productivity.

The foregoing and other objects and features of the present invention will be clearly understood from the following detailed description of preferred embodiments when read in conjunction with the accompanying drawings in which:
Figure 1 is a schematic illustration showing the behavior of catalytic elements of a catalyst in accordance with an embodiment of the invention when the catalyst is heated;
Figure 2 is a schematic illustration showing the behavior of catalytic elements of a prior art catalyst when the catalyst is heated;
Figure 3 is a perspective view of a catalytic converter to which the catalyst of the invention is applied;
Figure 4 is an enlarged view of a cell of the catalytic converter shown in Figure 3;
Figure 5 is a graphical diagram showing T-50 temperature regarding hydrocarbons (HC) according to thermal stabilization treatment applied to γ-alumina;
Figure 6 is a graphical diagram showing C-500 conversion efficiency regarding hydrocarbons (HC) according to thermal stabilization treatments applied to γ-alumina;
Figure 7 is a graphical diagram showing T-50 temperature regarding hydrocarbons (HC) according to conditions of thermal stabilization treatment applied to γ-alumina;
Figure 8 is a graphical diagram showing C-400 conversion efficiency regarding oxides of nitrogen (NOx) according to conditions of thermal stabilization treatment applied to γ-alumina;
Figure 9 is a graphical diagram showing T-50 temperature regarding hydrocarbons (HC) according to conditions of thermal stabilization treatment applied to γ-alumina;
Figure 10 is a graphical diagram showing C-400 conversion efficiency regarding oxides of nitrogen (NOx) according to conditions of thermal stabilization treatment applied to γ-alumina;
Figure 11 is a graphical diagram showing T-50 temperature regarding hydrocarbons (HC) according to barium contents of the catalyst;
Figure 12 is a graphical diagram showing C-500 conversion efficiency regarding carbon monoxide according to barium contents of the catalyst;
Figure 13 is a graphical diagram showing T-50 temperature regarding various emissions according to barium contents and layers containing barium of the catalyst;
Figure 14 is a graphical diagram showing C-400 conversion efficiency regarding various emissions according to barium content and layer containing barium of the catalyst;
Figure 15 is a graphical diagram showing T-50 temperature regarding various emissions according to types of barium salts;
Figure 16 is a graphical diagram showing C-400 conversion efficiency regarding various emissions according to types of barium salts;
Figure 17 is a graphical diagram showing C-500 conversion efficiency regarding various emissions according to types of barium salts;
Figure 18 a graphical diagram showing T-50 temperature regarding various emissions according to types of auxiliary catalytic metals; and
Figure 19 is a graphical diagram showing catalytic conversion efficiency regarding carbon monoxide (CO)) according to auxiliary catalytic metals and radii of atoms thereof.

The term "content" used herein shall mean and refer to the content of a material supported in one liter of a catalyst carrier coated with the catalyst, the term "T-50 temperature" used herein shall mean and refer to the temperature of a catalytic converter at its entrance necessary for the catalyst to show a catalytic conversion efficiency of 50 %, taking 100 % for complete elimination of all harmful emissions, and the term "C-500 conversion efficiency" or "C-400 conversion efficiency" used herein shall mean and refer to the catalytic conversion efficiency shown by the catalyst for exhaust gases at 500°C or at 400°C, respectively, at the entrance of the catalytic converter.

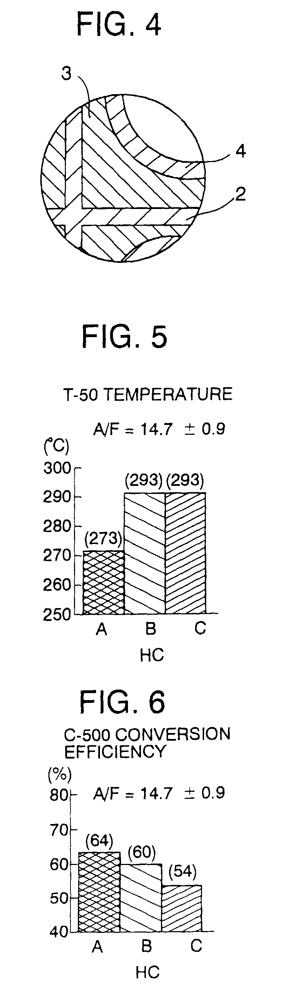

Referring to the drawings in detail, and in particular to Figures 3 and 4, a three way catalyst in accordance with an embodiment of the present invention is shown as purifying exhaust gases from an engine by converting emissions including hydrocarbons (HC), carbon monoxide (CO) and oxides of nitrogen (NOx). A honeycomb type catalytic converter 1, which is disposed in an exhaust line of an engine in a well known manner, has a great number of cells 2 with under and over catalytic layers 3 and 4 wash-coated thereto.

The over catalytic layer comprises ceria (CeO₂) as a support material and catalytic materials, namely platinum (Pt), rhodium (Rh) and barium (Ba), supported by the ceria (CeO₂). On the other hand, the under catalytic layer comprises γ-alumina as a support and catalytic materials, namely palladium (Pd) as a principal catalytic ingredient and barium (Ba) as an accessory catalytic ingredient, supported by the γ-alumina. Inclusion of composite metal oxides, such as for example a cerium (Ce) and zirconium (Zr) composite oxide and a cerium (Ce) and praseodymium (Pr) composite oxide, in the catalyst is favorable. Each catalytic ingredient is contained in the form of an oxide.

Because palladium (Pd) shows its catalytic activity at lower temperatures as compared with platinum (Pt) and rhodium (Rh), the under catalytic layer 3 is contributory to improvement in low temperature catalytic activity. Further, the catalytic activity of the over catalytic layer 4 is enhanced by the heat of catalytic reaction generated in the under catalytic layer 3. While palladium (Pd) is easily exposed in general to poisoning by hydrocarbons (HC) as compared with platinum (Pt) and rhodium (Rh) when coming into contact with a great amount of hydrocarbons (HC), the over catalytic layer 4 fills the role of preventing the palladium (Pd) in the under catalytic layer 3 from encountering poisoning by hydrocarbons (HC). The γ-alumina in the under catalytic layer 3 is treated to have thermal stability, and the barium (Ba) in the under catalytic layer 3 operates for the most part to prevent sintering of the palladium (Pd), consequently. On the other hand, the barium (Ba) in the over catalytic layer 4 is contributory not only to prevention of sintering of the platinum (Pt) and the rhodium (Rh) but to prevention of sintering of the ceria (CeO₂) making the catalyst maintain the effect of occluding and releasing oxygen.

For investigation of the effect of thermal stability treatment of active alumina on catalytic conversion efficiency for hydrocarbons (HC), a sample catalyst A in accordance with an embodiment of the invention and comparative sample catalysts B and C were prepared.

Powdered γ-alumina was heated at 900°C for 50 hours to form a thermally stabilized alumina as a base material which had partial bond between γ-alumina particles. A suspension prepared by adding water to the thermally stabilized alumina was mixed with a solution of dinitro-diamine palladium, vaporized and dried for solidification. The solid was thereafter pulverized to provide alumina particles with palladium supported thereby. Separately, a suspension of binder, such as boemite (Al₂O₃·H₂O), was mixed with the alumina particles with palladium supported to form a slurry The slurry was coated as a thin layer on a honeycomb catalyst carrier and heated at 500°C for two hours. Thereafter, the coating layer was impregnated with a solution of barium acetate of 450 gram per one liter of the honeycomb catalyst carrier and baked at 500°C for two hours to support palladium (Pd) in the γ-alumina, providing the catalyst A.

The catalyst A was applied to the honeycomb carrier the weight of which was 450 gram per one liter and adjusted to have a γ-alumina content of 120 g/L, a palladium content of 1.3 g/L and a barium content of 3 g/L. The binder content of the coating layer was 15 % by weight.

Comparative catalyst B was prepared in the same manner as the catalyst A. However, in the preparation of the comparative catalyst B, the thermal stabilization treatment of the γ-alumina was not carried out. In other words, the γ-alumina was heated at 900°C for 50 hours after supporting palladium (Pd) in the γ-alumina in the same manner as the catalyst A. Palladium (Pd) and barium (Ba) were supported in the comparative catalyst B in the same amounts as the catalyst A, and the binder content of the coating layer was 15 % by weight.

Comparative catalyst C was prepared in the same manner as the catalyst A without carrying out the thermal stabilization treatment of the γ-alumina at 900°C for 50 hours.

For evaluation of the catalytic conversion efficiency of the catalysts A, B and C for hydrocarbons (HC), after thermal aging treatment in an atmosphere at 1,000°C for 24 hours, measurements of T-50 temperature and C-500 conversion efficiency were made with a simulated exhaust gas. The exhaust gas was simulated as resulting from combustion of a fuel mixture when an air-to-fuel ratio (A/F) was periodically varied lean or rich between +/-0.9 centered at 14.7 (λ = 1) and containing emissions including 1,500 ppmC hydrocarbons (HC), 0.6 % carbon monoxide (CO), 0.1 % oxides of nitrogen (NOx), 0.6 % oxygen (O₂), 14 % carbon dioxide (CO₂) and the remainder of nitrogen (N₂). The simulated exhaust gas had a spatial velocity of 55,000 h⁻¹ and sampled 25 ml.

Referring to Figures 5 and 6 showing the result of measurements, regarding T-50 temperature after severe thermal aging, the catalyst A using the thermally stabilized alumina as a base material after the thermal stability treatment has a T-50 temperature lower approximately 20°C than each of the comparative catalysts B and C, which indicates that the thermal stability treatment is contributory to heat-resistance of the catalyst, leading to an assurance of low temperature catalytic activity. As apparent from T-50 temperatures of the comparative catalyst B, thermal treatment after having supported palladium (Pd) has less effect on improvement of low temperature catalytic activity. This is considered due to the palladium (Pd) partly buried in the thermally stabilized alumina as shown in Figure 2.

Regarding C-500 conversion efficiency, the catalyst A shows the highest C-500 conversion efficiency among the three. This indicates that the thermal stability treatment is contributory to improvement of C-500 conversion efficiency. The fact that the comparative catalyst B shows a higher C-500 conversion efficiency than the comparative catalyst C draws the conclusion that, while the comparative catalyst B buries palladium (Pd) partly in the thermally stabilized alumina, the barium (Ba) restrains sintering of the palladium (Pd) during the thermal aging treatment and that the comparative catalyst C buries both barium (Ba) and palladium (Pa) in the thermally stabilized alumina during the thermal aging treatment, making the barium (Ba) show less effect of restraining sintering of the palladium (Pd).

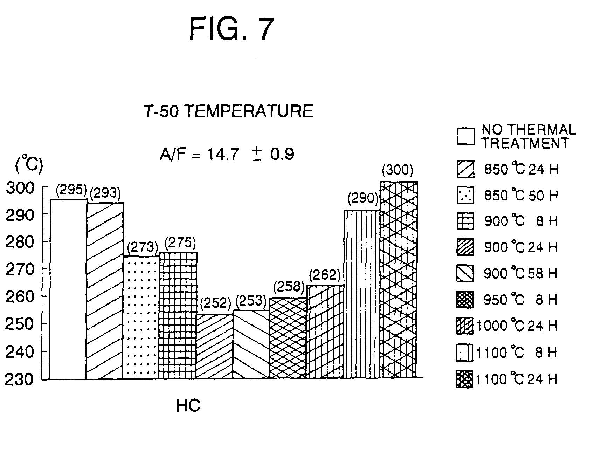

In order to reveal the effect of temperature and time conditions for thermal stability treatment of active alumina on T-50 temperature regarding hydrocarbons (HC), thermally stabilized alumina as a base material was heated at different temperatures for different times for thermal stabilization. Sample catalysts were prepared by supporting palladium (Pd) by the different alumina base materials, wash-coated on a catalyst carrier and baked. Each sample catalyst contained no barium (Ba) but 3 g/L in support amount of palladium (Pd) only. Each of these sample catalysts after thermal aging treatment at 1,000°C for 24 hours was tested for thermal stabilization treatment conditions in the same manner as for the catalytic conversion efficiency evaluation previously described. The result is shown in Figure 7.

It is proved from Figure 7 that the thermal stabilization treatment has the effect of lowering the T-50 temperature of the catalyst even when the treatment is carried out at 850°C as long as it is continued for a long time, such as 50 hours and that while an increase in treatment temperature permits shortening the treatment time, for example, to eight hours with the same effect, the treatment at temperatures higher than approximately 1,100°C does not provide the effect as intended if made for only a short time.

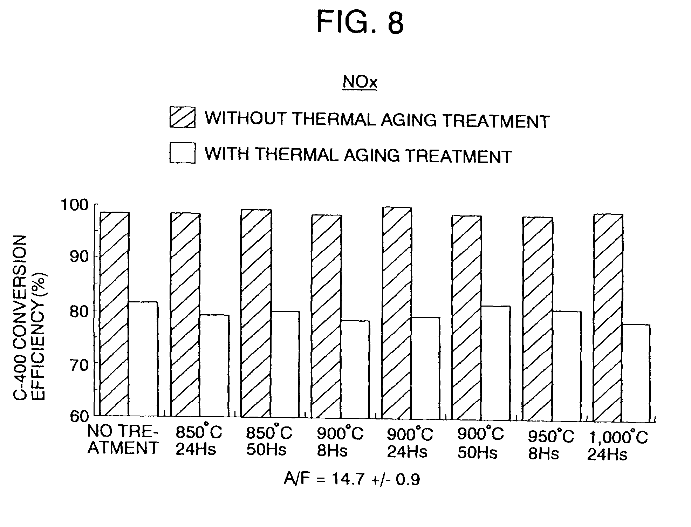

Figure 8 shows the result of evaluation tests of C-400 conversion efficiency for oxides of nitrogen (NOx) regarding thermal stabilization conditions, namely temperature and time. The tests were conducted under the same conditions for the eveluation tests for T-50 temperature for hydrocarbons (HC). As seen in Figure 8, there is no significant difference of C-400 conversion efficiency among the catalysts with or without the thermal aging treatment in an atmosphere at 1,000°C for 24 hours after manufacture of the catalysts. However, while the thermal stabilization condition has almost no significant effect on C-400 conversion efficiency for oxide of nitrogen (NOx), there is a tendency that the longer the time of thermal stabilization treatment is around a temperature of 900°C, the more the C-400 conversion efficiency for oxides of nitrogen (NOx) is improved.

In order to conduct tests to evaluate the effect of evaluation of the thermal stabilization treatment conditions for γ-alumina with palladium (Pd) supported thereby of the catalyst which contained ceria (CeO₂) with barium (Ba) supported thereby on T-50 temperature for hydrocarbons (HC) and C-400 conversion efficiency for oxides of nitrogen (NOx), different from the evaluation of the thermal stabilization treatment conditions for γ-alumina without palladium (Pd) supported thereby on T-50 temperature for hydrocarbons (HC) and C-400 conversion efficiency for oxides of nitrogen (NOx), sample catalysts were prepared.

After thermal stabilization treatment of γ-alumina at different temperatures between 850 and 1,000°C, a slurry was made by mixing the γ-alumina with a specified amount of ceria (CeO₂) and a palladium solution and then vaporized for solidification. The mixture was wash-coated on a honeycomb carrier and dried at a temperature of 200°C for one hour. Thereafter, the mixture was baked at a temperature of 500°C for two hours and impregnated with a specified amount of a barium acetate solution and baked again at 500°C for two hours, providing the catalyst. The content ratio in weight of γ-alumina and ceria (CeO₂) was 1 : 1, and the total content of γ-alumina and ceria (CeO₂) of the catalyst was 120 g/L. The catalyst was adjusted to have a palladium content of 1.3 g/L and a barium content of 3 g/L.

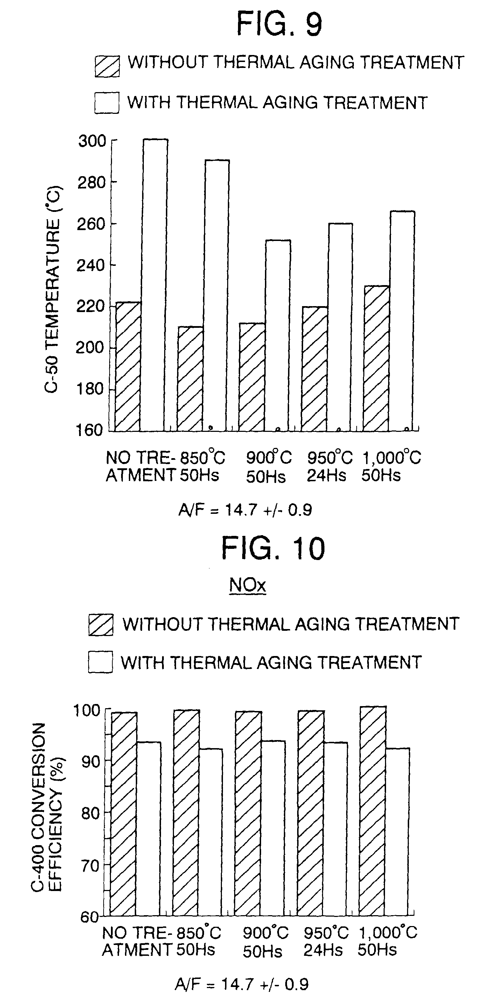

As seen in Figure 9 showing the result of evaluation tests of T-50 temperature for hydrocarbons (HC), the catalyst for which the thermal stabilization treatment was carried out at a temperature of 850°C for 50 hours exhibits a low T-50 temperature in the case that no thermal aging treatment was carried out after manufacture of the catalyst and, however, provides a sharp increase in T-50 temperature in the case that the thermal aging treatment was carried out after manufacture of the catalyst. From the fact, it is revealed that the thermal aging treatment carried out after manufacture of a catalyst causes aggravation of performance of the catalyst. Although no data on T-50 temperature for hydrocarbons (HC) of the catalysts for which the thermal stabilization treatment at temperatures above 1,000°C were carried out appears in Figure 9, it is assumed from the fact that the catalyst without barium (Ba) contained therein for which the thermal stabilization treatment were carried out at a temperature of 1,100°C provides significant aggravation of T-50 temperature as shown in Figure 7 that the catalyst for which the thermal stabilization treatment are carried out at temperatures above 1,000°C encounters aggravation of T-50 temperature even if it contains barium (Ba). From comparison of the test result of C-400 conversion efficiency for hydrocarbons (HC) shown in Figure 8 with those shown in Figure 10, it is apparent that the addition of barium (Ba) in the catalyst provides improvement of catalytic conversion efficiency for oxides of nitrogen (NOx) after the thermal aging treatment at high temperature if the catalyst has been treated, in particular, at 900°C for 50 hours for thermal stability. As a result of the above evaluation, it is concluded that the treatment temperature is considered suitable to be between 850 and 1,000°C, and more preferably between 900 and 1,000°C, and the treatment time is considered suitable to be between 8 and 50 hours. It is concluded that the most suitable treatment condition is approximately 900°C for 24 to 50 hours. From the fact apparent from Figure 9 that the catalyst treated at 1,000°C for 50 hours for thermal stability shows aggravation of T-50 temperature if it is not thermally aged, it is found that, in order for a catalyst to perform with high catalytic conversion efficiency throughout its long time file from when it is fresh to after exposure to hot exhaust gases, the catalyst is desired to be treated for thermal stabilization at temperatures between 900 and 950°C.

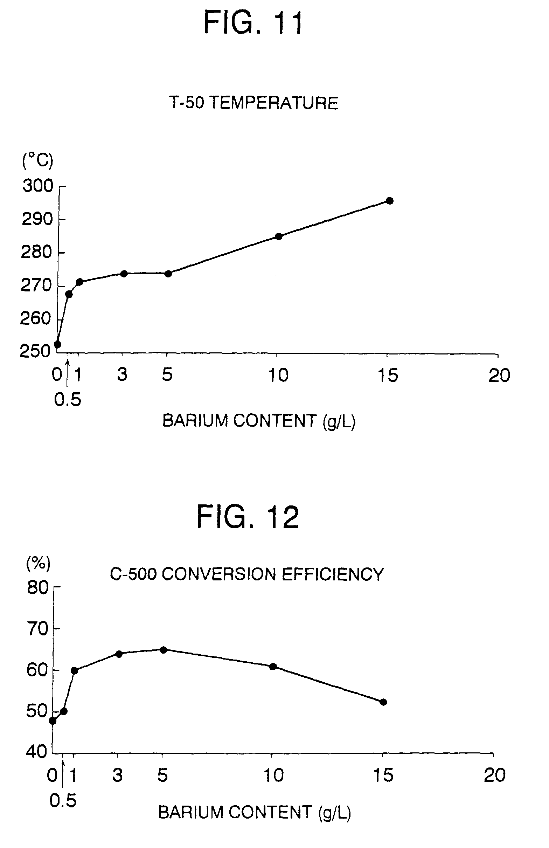

Further, tests were made in order to reveal the effect of the supported amount of barium in the sample catalyst A on the T-50 temperature regarding hydrocarbons (HC) and the C-500 conversion efficiency regarding carbon monoxide (CO). The test results are shown in Figures 11 and 12.

As indicated by the test result in Figure 11, it is proved that the T-50 temperature increases with an increase in the supported amount of barium (Ba). On the other hand, as indicated by the test result in Figure 12, the C-500 conversion efficiency increases with an increase in the supported amount of barium (Ba) to 5 g/L and, however, decreases with an increase in the supported amount of barium (Ba) over 5 g/L. With consideration of both decline in the T-50 temperature regarding hydrocarbons (HC) and improvement of the C-500 conversion efficiency regarding carbon monoxide (CO) due to the addition of barium (Ba), it is concluded that the supported amount of barium (Ba) is suitable to be between 1.0 and 20 g/L or 1.0 and 10 g/L, and more preferably between 3 and 10 g/L or 3 and 5 g/L.

For evaluation of the effect of barium (Ba) on T-50 temperature and C-400 conversion efficiency for emissions including hydrocarbons (HC), carbon monoxide (CO) and oxides of nitrogen (NOx), various sample catalysts D - J were prepared. The catalysts D and G - J was comprised of two catalytic layers, either one of which barium (Ba) was supported in different amounts. While the catalyst E was comprised of two catalytic layers, it did not support barium (Ba) in its under catalytic layer nor in its over catalytic layer. The catalyst F was comprised of a single catalytic layer without barium (Ba) supported. These catalysts D - J are summarized in Table I.

**TABLE I**

| (Catalytic Layer With Barium Contained) | | | | | | | | |
|---|---|---|---|---|---|---|---|---|
| CATALYST | | D | E | F | G | H | I | J |
| BARIUM CONTENT | 1 g/L | --- | --- | --- | UD | --- | OV | --- |
| | 3 g/L | BOTH | --- | --- | --- | UD | --- | OV |
| (BOTH: over and under layers, OV: over layer, UD: under layer) | | | | | | | | |

Sample catalyst D was comprised of under and over catalytic layers, each of which supported barium (Ba) of 3 g/L. The under catalytic layer was formed in the following manner. Powdered γ-alumina was heated at 900°C for 50 hours to form a thermally stabilized alumina as a base material which had partial bond between γ-alumina particles. A suspension was prepared by adding water to a mixture of the thermally stabilized, ceria (CeO₂) and cerium (Ce) and praseodymium (Pr) composite oxide roughly at a ratio of 20 : 20 : 1, or more exactly at a ratio of 30 : 28.5 : 1.5. The suspension was mixed with a solution of dinitro-diamine palladium, vaporized and dried for solidification. The solid was thereafter pulverized to provide alumina particles with palladium supported thereby. Separately, a suspension of binder, such as boemite (Al₂O₃·H₂O), was mixed with the alumina particles with palladium supported to form a slurry. The slurry was wash-coated on a honeycomb catalyst carrier and heated at 500°C for two hours to form an under catalytic layer.

A ceria suspension of a water-to-ceria ratio of 3 : 2 was mixed with a solution of platinum and phosphorus salt (an acid solution of dinitro-diamine platinic [II] nitric acid) and a solution of rhodium nitrate. The mixture was vaporized and dried for solidification. The solid was thereafter pulverized into particles. Thereafter, slurry was prepared by mixing the particles with a suspension of binder, such as boemite (Al₂O₃·H₂O). The slurry was wash-coated over the under catalytic layer on the honeycomb catalyst and heated at 500°C for two hours, providing an over catalytic layer. The honeycomb catalyst was dipped in a solution of barium acetate to impregnate the under and over catalytic layers with barium and baked at 500°C for two hours, thus providing the catalyst D.

The catalyst A was adjusted to contain platinum (Pt), palladium (Pd) and rhodium (Rh) with a content ratio of 1 : 17 : 3, the total supported amount of which was 3.15 g/L. The total amount of barium (Ba) supported in both under and over catalytic layers was 3 g/L. The under and over catalytic layers were equal in barium concentration to each other and had an equal binder content of 15 weight %. Each of the under and over catalytic layers was 60 g/L.

Sample catalyst E was prepared as a comparative catalyst in the same structure and same manner as the catalyst D and, however, did not contain barium (Ba) either in the under catalytic layer nor in the over catalytic layer.

Sample catalyst F was prepared as another comparative catalyst as having a single catalytic layer which was the same as the over catalytic layer and, however, did not contain barium (Ba). The catalyst F was adjusted to contain platinum (Pt) and rhodium (Rh) with a content ratio of 5 : 1, the total supported amount of which was 1.6 g/L, and to have a binder content of 15 weight %.

Sample catalyst G was prepared in the same structure and same manner as the catalyst D, excepting that the under catalytic layer contained 1 g/L barium (Ba) and the over catalytic layer did not contain barium (Ba) at all.

Sample catalyst H was prepared in the same structure and same manner as the catalyst D, excepting that the under catalytic layer contained 3 g/L barium (Ba) and the over catalytic layer did not contain barium (Ba) at all.

Sample catalyst I was prepared in the same structure and same manner as the catalyst D, excepting that the over catalytic layer contained 1 g/L barium (Ba) and the under catalytic layer did not contain barium (Ba) at all.

Sample catalyst J was prepared in the same structure and same manner as the catalyst D, excepting that the over catalytic layer contained 3 g/L barium (Ba) and the under catalytic layer did not contain barium (Ba) at all.

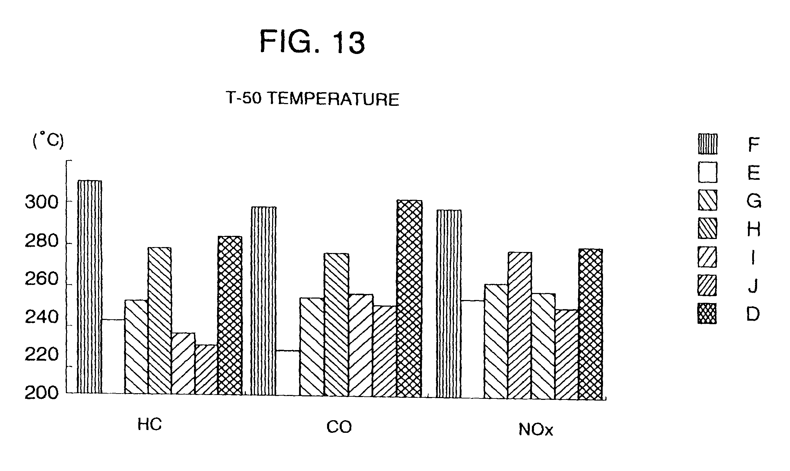

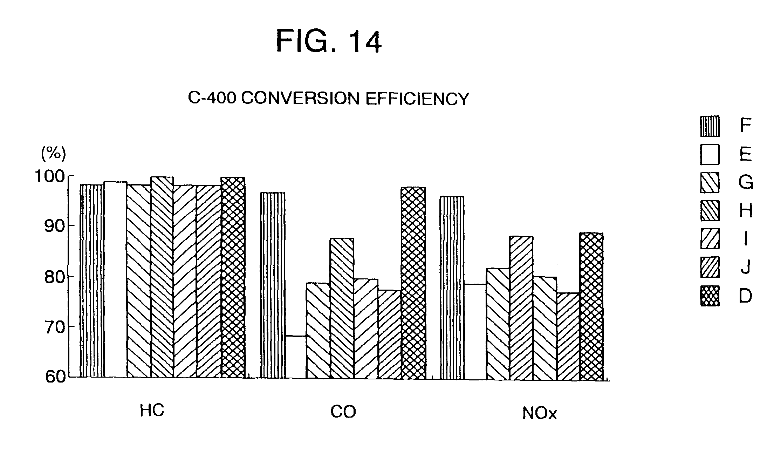

For evaluation of the catalysts regarding T-50 temperature and C-500 conversion efficiency, after thermal aging treatment in an atmosphere at 1,100°C for 24 hours, measurements of T-50 temperature and C-500 conversion efficiency were made with the same simulated exhaust gas as used in the evaluation of the catalytic conversion efficiency of the catalysts A, B and C for hydrocarbons (HC), excepting that it had a spatial velocity of 60,000 h⁻¹. The results are shown in Figures 13 and 14.

As revealed from Figure 13 showing the result of measurements regarding T-50 temperature, the barium (Ba), if contained in the under catalytic layer only, has a significant effect on the T-50 temperature and lowers significantly the T-50 temperature with an increase in barium content. On the other hand, the barium (Ba), if contained in the over catalytic layer only, has almost no significant effect on the T-50 temperature and, however, tends to lower slightly the T-50 temperature with an increase in barium content. Further, if barium (Ba) is contained in both under and over catalytic layers, it has a significant effect of raising the T-50 temperature.

As revealed from Figure 14 showing the result of measurements regarding C-400 conversion efficiency, barium (Ba) has almost no effect on the catalytic conversion efficiency regarding hydrocarbons (HC) at high temperatures. Barium (Ba) has an effect on the catalytic conversion efficiency regarding carbon monoxide (CO) at high temperatures. This effect is significant particularly if a little amount of barium (Ba) is contained in the under catalytic layer. Regarding oxides of nitrogen (NOx), barium (Ba) has an effect on the C-400 conversion efficiency if contained in the under catalytic layer and, however, has less effect on the C-400 conversion efficiency.

From the above study with regard to the results shown in Figures 13 and 14, it is concluded that a small amount of barium additive in the under catalytic layer is favorable to improvement of catalytic conversion efficiency at high temperatures regarding emissions including carbon monoxide (CO) and oxides of nitrogen (NOx) with catalytic conversion efficiency regarding a hydrocarbon emission remaining high and without a significant change in low temperature catalytic activity. This is considered as a result from no barium additive in the over catalytic layer. That is, the over catalytic layer permits emissions in the exhaust gas to pass therethrough and reach the under catalytic layer where the emissions are converted or reduced by palladium (Pd). If barium (Ba) is contained in the over catalytic layer, then improvement in catalytic conversion efficiency at high temperatures can not be expected with regard to oxides of nitrogen (NOx) and might be yielded with regard to hydrocarbons (HC) and carbon monoxide (CO) without aggravation of low temperature catalytic activity.

An extra sample catalyst DX was prepared as a modification of the sample catalyst D in order to examine the effect of catalytic metals on T-50 temperature and C-400 conversion efficiency. The extra catalyst DX was adjusted to be different in the total content of catalytic metals, namely platinum (Pt), palladium (Pd) and rhodium (Rh), from the catalyst D. Specifically, the extra catalyst DX contained platinum (Pt), palladium (Pd) and rhodium (Rh), the total content of which was 7 g/L and the content ratio of which was the same as the catalyst D.

The comparative results of measurements regarding T-50 temperature and C-400 conversion efficiency was shown in the following Tables II and III.

**TABLE II**

| (T-50 Temperature) | | | |
|---|---|---|---|
| CATALYST | HC | CO | NOx |
| CATALYST D | 280°C | 280°C | 275°C |
| CATALYST DX | 235°C | 245°C | 205°C |

**TABLE III**

| (C-400 Conversion Efficiency) | | | |
|---|---|---|---|
| CATALYST | HC | CO | NOx |
| CATALYST D | 99 % | 87 % | 87 % |
| CATALYST DX | 99 % | 92 % | 97 % |

At a glance at Tables II and III, it is revealed that the higher the catalytic metal content is, the more the catalytic performance for emissions, in particular, oxides of nitrogen (NOx) is improved.

For evaluation of the effect of types of barium salts and barium contents on T-50 temperature and C-400 conversion efficiency for emissions including hydrocarbons (HC), carbon monoxide (CO) and oxides of nitrogen (NOx), various sample catalysts L - P were prepared in addition to the catalysts D and E, as shown in Table IV.

**TABLE IV**

| (Total Barium Content) | | | | | | | |
|---|---|---|---|---|---|---|---|
| BARIUM SALT | D | E | L | M | N | O | P |
| BARIUM ACETATE | 3 g/L | --- | 0.5 g/L | 1 g/L | 2 g/L | --- | --- |
| BARIUM NITRATE | --- | --- | --- | --- | --- | 3 g/L | --- |
| BARIUM OXALATE | --- | --- | --- | --- | --- | --- | 3 g/L |

Sample catalysts L - N were prepared in the same structure and same manner as the catalyst D previously described, excepting that the total barium contents in the under and over catalytic layers were 0.5 g/L, 1 g/L and 2 g/L, respectively. Sample catalyst O was prepared in the same structure and same manner as the catalyst D previously described, excepting that barium nitrate was used in place of barium acetate and the total barium content in the under and over catalytic layers was 3 g/L. Sample catalyst P was prepared in the same structure and same manner as the catalyst D previously described, excepting that barium oxalate was used in place of barium acetate and the total barium content in the under and over catalytic layers was 3 g/L.

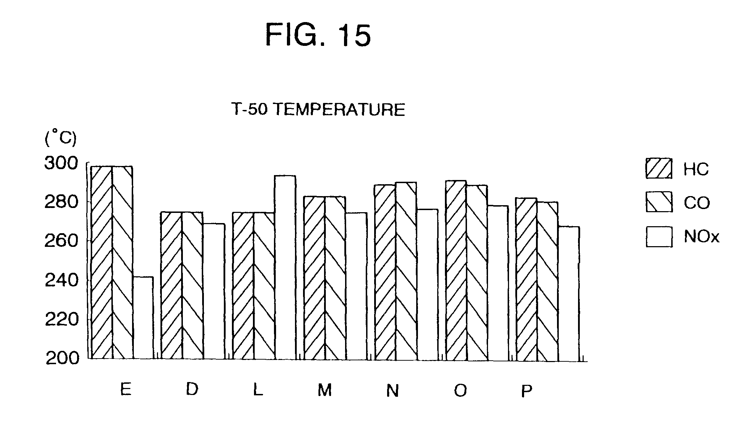

For evaluation of the catalysts D, E, and L - P regarding T-50 temperature and C-500 conversion efficiency, after thermal aging treatment in an atmosphere at 1,100°C for 24 hours, measurements of T-50 temperature, C-400 and C-500 conversion efficiency were made with the same simulated exhaust gas as used in the evaluation of the catalytic conversion efficiency of the catalysts A, B and C for hydrocarbons (HC), excepting that it had a spatial velocity of 60,000 h⁻¹. The results are shown in Figures 15 through 17.

As revealed from Figure 15 showing the result of measurements regarding T-50 temperature, while the catalyst L whose barium content is small and 0.5 g/L shows a high T-50 temperature regarding an emission, oxides of nitrogen (NOx), other catalysts whose barium contents are large do not show so high T-50 temperatures. As a result, it is concluded that suitable barium contents are above 1.0 g/L, and that while, when focusing on emissions including hydrocarbons (HC) only, the barium oxalate is considered to be a favorable barium salt for T-50 temperature, the barium acetate is the most favorable barium salt for T-50 temperature regarding throughout emissions including hydrocarbons (HC), carbon monoxide (CO) and oxides of nitrogen (NOx).

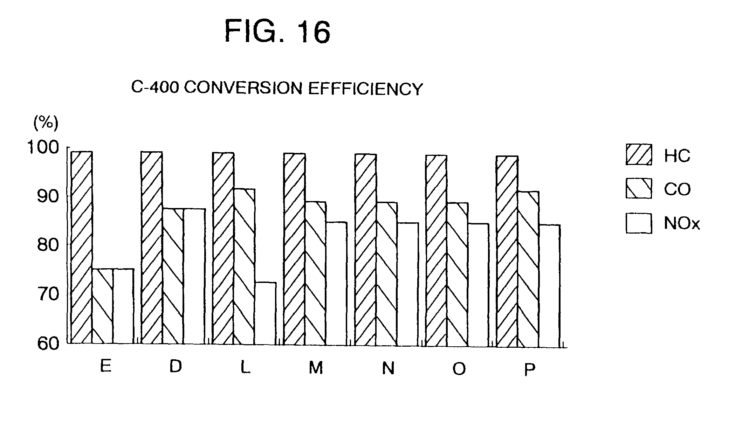

As revealed from Figure 16 showing the result of measurements regarding C-400 conversion efficiency, there is no difference in C-400 conversion efficiency for emissions including hydrocarbons (HC) among the catalysts D, E, and L - P, and all of the catalysts D, E, and L - P yield improvement of C-400 conversion efficiency for emissions including carbon monoxide (CO) and oxides of nitrogen (NOx) which is due to the barium additive. However, the catalyst L prepared by use of barium whose barium content is 0.5 g/L shows a C-400 conversion efficiency for emissions including oxides of nitrogen (NOx) lower as compared with other catalysts. Regarding an emission including carbon monoxide (CO), the catalyst P prepared by using barium oxalate whose barium content is 3 g/L is ranked first in order of C-400 conversion efficiency among the seven catalysts, followed by the catalyst L prepared by using barium acetate whose barium content is 0.5 g/L. Further, regarding emissions including oxides of nitrogen (NOx), the catalyst K prepared by using barium acetate whose barium content is 3 g/L shows the highest C-400 conversion efficiency among the seven catalysts, and the catalysts M - P show favorable C-400 conversion efficiency at substantially the same level.

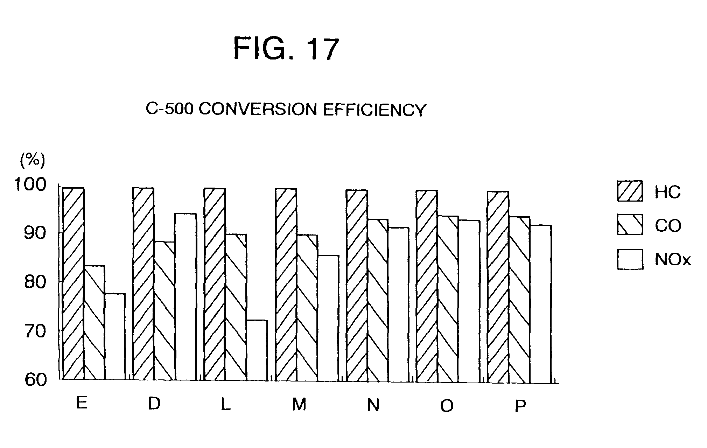

At a glance at Figure 17 showing the result of measurements of C-500 conversion efficiency for the catalysts D, E and L - P, it is revealed that almost all of the catalysts exhibit approximately the same tendency in C-500 conversion efficiency as in C-400 conversion efficiency and that a barium additive provides an increase in C-500 conversion efficiency, which is higher a little as compared with C-400 conversion efficiency, for emissions including oxides of nitrogen (NOx) and carbon monoxide (CO).

As a result from the above consideration, it is concluded that not only barium acetate but barium nitrate or oxalate barium yields relatively favorable effects on T-50 temperature and C-400 and C-500 conversion efficiency and these effects of a barium additive are unaffected by the types of barium salts. It is also concluded that desirable barium contents are more than 1 g/L.

For evaluation of the effect of auxiliary catalytic metals on T-50 temperature and C-400 conversion efficiency for emissions including hydrocarbons (HC), carbon monoxide (CO), and oxides of nitrogen (NOx), various sample catalysts Q, R and S were prepared in addition to the catalysts D and E.

Sample catalysts Q, R and S were prepared in the same structure and same manner as the catalyst D, excepting that barium (Ba) as an auxiliary catalytic metal was replaced with lanthanum (La), zirconium (Zr) or neodymium (Nd), respectively, and the auxiliary catalytic metal content of the under and over catalytic layers of each sample catalyst was 3 g/L.

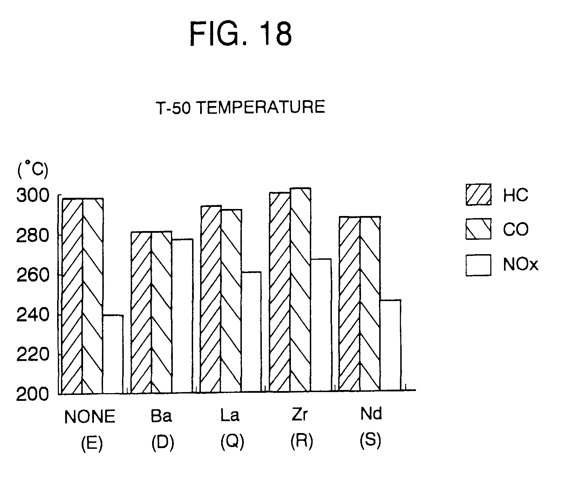

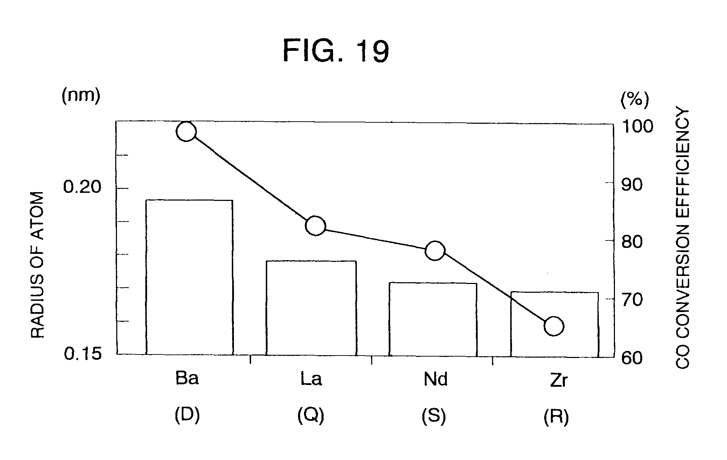

For evaluation of the catalysts D, E, and Q - S regarding T-50 temperature and C-400 conversion efficiency, after thermal aging treatment in an atmosphere at 1,100°C for 24 hours, measurements of T-50 temperature and C-400 conversion efficiency were made with the same simulated exhaust gas as used in the evaluation of the catalytic conversion efficiency of the catalysts A, B and C. The spatial velocity of the simulated exhaust gas was 60,000 h⁻¹. The results are shown in Figures 18 and 19.

As revealed from Figure 18 showing the result of measurements regarding T-50 temperature, the lanthanum (La), zirconium (Zr) or neodymium (Nd) additive provides improvement regarding emissions including oxides of nitrogen (NOx) as compared with a barium additive and, however, brings about aggravation regarding emissions including hydrocarbons (HC) and carbon monoxide (CO).

As also revealed from Figure 19 showing the result of measurements regarding C-400 conversion efficiency for carbon monoxide (CO) along with radii of atoms of the auxiliary catalytic metals, the C-400 conversion efficiency for carbon monoxide (CO) varies according to sizes of atoms of the auxiliary catalytic metals.

As a result from the above consideration, it is concluded that a barium additive with large radius of atoms is more favorable as one of auxiliary catalytic metals.

It is to be understood that although the present invention has been described with regard to preferred embodiments thereof, various other embodiments and variants may occur to those skilled in the art, which are within the scope and spirit of the invention, and such other embodiments and variants are intended to be covered by the following claims.

## Claims

1. An exhaust gas purifying catalyst formed on a catalyst carrier for purifying exhaust gases resulting from fuel combustion, said exhaust gas purifying catalyst comprising:
an alumina base material with active alumina particles partly bonded together by thermal treatment, and a principal catalytic and at least one of auxiliary catalytic materials selected from barium (Ba), lanthanum (La), zirconium (Zr) and neodymium (Nd) supported by said alumina base material.

2. An exhaust gas purifying catalyst as defined in claim 1, wherein said alumina base material comprises γ-alumina.

3. An exhaust gas purifying catalyst as defined in claim 1 or 2, wherein said principal catalytic material comprises one of noble metals.

4. An exhaust gas purifying catalyst as defined in one or more of claims 1 to 3, wherein said auxiliary catalytic metal is barium (Ba).

5. An exhaust gas purifying catalyst as defined in claim 4, wherein said catalyst carrier comprises a monolith catalyst carrier and said catalyst contains said auxiliary catalytic barium (Ba) with a content between 1 and 20 gram per one liter of said monolith catalyst carrier.

6. An exhaust gas purifying catalyst coated in a form of double catalytic layers on a catalyst carrier for purifying exhaust gases resulting from fuel combustion, said exhaust gas purifying catalyst comprising:
a first catalytic layer containing a catalytic material supported by ceria; and
a second catalytic layer containing a principal catalytic material and at least one auxiliary catalytic material selected among barium (Ba), lanthanum (La), zirconium (Zr) and neodymium (Nd), which are supported by an alumina base material with active alumina particles partly bonded together by thermal treatment.

7. An exhaust gas purifying catalyst as defined in claim 6, wherein said first catalytic layer is coated over said second catalytic layer directly coated on said catalytic carrier.

8. A method of producing an exhaust gas purifying catalyst for purifying exhaust gases resulting from fuel combustion, said method comprising the steps of:
producing a base material by heating active alumina particles so as to bond partly said active alumina particles together; and
supporting a principal catalytic material and at least one auxiliary catalytic metal selected among barium (Ba), lanthanum (La), zirconium (Zr) and neodymium (Nd) by said base material to provide a catalyst product.

9. A method of producing an exhaust gas purifying catalyst as defined in claim 8, wherein said base material is produced by heating said active alumina particles at a temperature between 900 and 1,000°C.

10. A method of producing an exhaust gas purifying catalyst as defined in claim 8 or 9, wherein said base material is produced by heating said active alumina particles for a time between 8 and 50 hours.

11. A method of producing an exhaust gas purifying catalyst as defined in one or more of claims 8 to 10, and further comprising the steps of forming a slurry of said catalyst product, coating said slurry on a catalyst carrier and drying said slurry coated on said catalyst carrier.

12. An exhaust gas purifying catalyst as defined in one or more of claims 8 to 11, wherein said auxiliary catalytic metal is barium (Ba).

13. An exhaust gas purifying catalyst as defined in claim 12, wherein said catalyst carrier comprises a monolith catalyst and said catalytic layer contains said auxiliary catalytic barium (Ba) with a content between 1 and 20 gram per one liter of said monolith catalyst.
